Europäisches Patentamt

European Patent Office

Office européen des brevets

(11) Numéro de publication: **0 323 672 B1**

(12) **FASCICULE DE BREVET EUROPEEN**

(45) Date de publication de fascicule du brevet: **03.06.92** (51) Int. Cl.⁵: **B32B 27/08**, B65D 30/08

(21) Numéro de dépôt: **88203010.9**

(22) Date de dépôt: **27.12.88**

(54) **Structures à couches polymériques multiples comprenant une couche en polymère du fluorure de vinylidène liée à une couche en polymère plastifié du chlorure de vinyle et utilisation de ces structures pour la fabrication d'emballages souples.**

(30) Priorité: **08.01.88 BE 8800018**

(43) Date de publication de la demande:
**12.07.89 Bulletin 89/28**

(45) Mention de la délivrance du brevet:
**03.06.92 Bulletin 92/23**

(84) Etats contractants désignés:
**AT BE CH DE ES FR GB GR IT LI LU NL SE**

(56) Documents cités:
**EP-A- 0 124 931**

(73) Titulaire: **SOLVAY**
**Rue du Prince Albert, 33**
**B-1050 Bruxelles(BE)**

(72) Inventeur: **Dehennau, Claude**
**Chemin des Postes, 236**
**B-1410 Waterloo(BE)**

**Description**

La présente invention concerne des structures à couches polymériques multiples comprenant une couche en polymère du fluorure de vinylidène liée à une couche en polymère plastifié du chlorure de vinyle dans lesquelles le polymère du fluorure de vinylidène est lié au polymère plastifié du chlorure de vinyle à l'intervention d'adhésifs polymériques, ainsi que l'utilisation de ces structures pour la fabrication d'emballages souples.

Il est connu d'associer au sein d'une structure à couches polymériques multiples (complexe multicouche) des polymères différents apportant chacun leurs propriétés et avantages spécifiques.

Dans la demande de brevet FR-A-84.06 372 (SOLVAY & Cie), on décrit des structures dans lesquelles une couche en polymère du fluorure de vinylidène est associée à une couche en polymère plastifié du chlorure de vinyle à l'intervention d'un adhésif polymérique constitué d'un copolymère d'acétate de vinyle et d'éthylène contenant de 60 à 90 % en poids d'acétate de vinyle. Quoique les adhésifs polymériques en cause constituent de bons adhésifs à température ambiante, leur résistance au délaminage décroit fortement avec une élévation de la température, ce qui limite leurs débouchés aux domaines où une résistance élevée au délaminage à chaud n'est pas exigée.

La présente invention vise à procurer des structures à couches polymériques multiples comprenant une couche en polymère du fluorure de vinylidène liée à une couche en polymère plastifié du chlorure de vinyle qui présentent une résistance au délaminage à chaud nettement améliorée.

A cet effet, l'invention procure des structures à couches polymériques multiples comprenant une couche en polymère du fluorure de vinylidène liée à une couche en polymère plastifié du chlorure de vinyle au moyen d'un mélange d'adhésifs polymériques constitué de copolymère d'acétate de vinyle et d'éthylène et de copolymère de chlorure de vinyle et d'acétate de vinyle, ledit mélange contenant de 36 à 95 % en poids d'acétate de vinyle et présentant une viscosité dynamique à 100°C et 1 sec$^{-1}$ égale à 55 kPa.s au moins.

On a constaté que, contrairement aux copolymères d'acétate de vinyle et d'éthylène préconisés dans l'art antérieur, les mélanges de tels copolymères avec des copolymères de chlorure et d'acétate de vinyle adhérent parfaitement à température élevée aux polymères du fluorure de vinylidène et aux polymères plastifiés du chlorure de vinyle à condition que la teneur en acétate de vinyle desdits mélanges soit comprise entre 36 et 95 % en poids et que leur viscosité dynamique à 100°C et 1 sec$^{-1}$ soit égale à 55 kPa.s au moins.

L'invention réside donc essentiellement dans le recours à un mélange de copolymère d'acétate de vinyle et de copolymère de chlorure de vinyle tels que définis ci-dessus pour lier et faire adhérer une couche en polymère du fluorure de vinylidène à une couche en polymère plastifié du chlorure de vinyle dans la réalisation de structures à couches polymériques multiples.

Par structures à couches polymériques multiples comprenant une couche en polymère du fluorure de vinylidène liée à une couche en polymère plastifié du chlorure de vinyle, on entend donc désigner les structures multicouches contenant au moins une couche en polymère du fluorure de vinylidène liée à au moins une couche en polymère plastifié du chlorure de vinyle. Les structures à couches polymériques multiples selon l'invention peuvent donc contenir une ou plusieurs couches en polymère de fluorure de vinylidène liées à une ou plusieurs couches en polymère plastifié du chlorure de vinyle, ces couches pouvant elles-mêmes être liées à des couches d'autres polymères.

Par copolymère d'acétate de vinyle et d'éthylène, on entend désigner les copolymères d'acétate de vinyle et d'éthylène contenant au moins 50 % en poids d'acétate de vinyle. Les meilleurs résultats sont obtenus avec les copolymères binaires d'acétate de vinyle et d'éthylène contenant de 60 à 99 % en poids d'acétate de vinyle et, plus particulièrement encore, avec ceux contenant de 70 à 95 % en poids d'acétate de vinyle auxquels on donne, par conséquent, la préférence.

Les copolymères d'acétate de vinyle et d'éthylène tels que définis ci-dessus sont des polymères plus ou moins collants et, de ce fait, difficiles à mettre en oeuvre. Afin de pallier cet inconvénient, il est particulièrement avantageux d'utiliser un copolymère d'acétate de vinyle et d'éthylène enrobé d'un polymère thermoplastique. Suivant un mode de réalisation préféré de l'invention, on utilise donc un copolymère d'acétate de vinyle et d'éthylène enrobé d'un polymère thermoplastique. A titre d'exemples de pareils polymères thermoplastiques, on peut citer les polymères du fluorure de vinylidène et les polymères du chlorure de vinyle. Un polymère thermoplastique d'enrobage tout particulièrement préféré est le polychlorure de vinyle. Le polymère thermoplastique d'enrobage est généralement présent à raison d'environ 10 % en poids au maximum du polymère d'acétate enrobé.

L'enrobage du copolymère d'acétate de vinyle et d'éthylène par un polymère thermoplastique peut s'effectuer, par exemple, par addition à un latex de copolymère d'acétate de vinyle d'un latex de polymère thermoplastique et coagulation de l'ensemble, par exemple par addition d'un électrolyte.

Par copolymère de chlorure de vinyle et d'acétate de vinyle, on entend désigner les copolymères de chlorure de vinyle et d'acétate de vinyle contenant au moins 50 % en poids de chlorure de vinyle. Les meilleurs résultats sont obtenus avec les copolymères binaires de chlorure et d'acétate de vinyle contenant de 60 à 98 % en poids de chlorure de vinyle et, plus particulièrement encore avec ceux contenant de 80 à 95 % en poids de chlorure de vinyle.

Les proportions relatives de copolymère d'acétate de vinyle et de copolymère de chlorure de vinyle dans le mélange d'adhésifs polymériques peuvent varier dans une large mesure pour autant que la teneur en acétate de vinyle du mélange soit comprise entre 36 et 95 % en poids et que sa viscosité dynamique à 100°C et 1 sec$^{-1}$ soit égale à 55 kPa.s au moins.

On donne néanmoins la préférence aux mélanges dont la teneur en acétate de vinyle est comprise entre 36 et 90 % en poids et dont la viscosité dynamique à 100°C et 1 sec$^{-1}$ est égale à 60 kPa.s au moins.

Suivant un mode de réalisation particulièrement préféré, on utilise des mélanges d'adhésifs polymériques selon l'invention pour lesquels le produit de la teneur pondérale en acétate de vinyle, exprimée en pourcent, par la viscosité dynamique à 100°C et 1 sec$^{-1}$, exprimée en kPa.s est supérieur à $3.10^3$ et plus particulièrement encore à $3,5.10^3$.

Sur le plan de l'adhérence, il n'y a pas d'inconvénient à utiliser des mélanges d'adhésifs polymériques dont la viscosité dynamique soit très élevée. En pratique néanmoins pour des raisons de facilité de mise en oeuvre notamment, on limite généralement la viscosité dynamique à 100°C et 1 sec$^{-1}$ des mélanges d'adhésifs polymériques à 300 kPa.s.

Par polymère du fluorure de vinylidène, on entend désigner tous les polymères contenant au moins 85 % molaires, et, de préférence, au moins 90 % molaires d'unités monomériques dérivées du fluorure de vinylidène. Les polymères du fluorure de vinylidène qui conviennent à la réalisation des structures multicouches selon l'invention comprennent donc aussi bien les homopolymères du fluorure de vinylidène, que les copolymères du fluorure de vinylidène contenant des unités monomériques dérivées d'un ou de plusieurs comonomères. On donne la préférence aux polymères contenant au moins 90 % molaires d'unités monomériques dérivées du fluorure de vinylidène, le complément éventuel étant constitué de préférence d'unités monomériques dérivées d'autres oléfines fluorées, tels que le fluorure de vinyle, le trifluoréthylène, le chlorotrifluoréthylène, le tétrafluoréthylène et l'hexafluorpropylène.

Par polymère du chlorure de vinyle, on entend désigner ici les polymères contenant au moins 70 % en poids d'unités monomériques dérivées du chlorure de vinyle. Les polymères du chlorure de vinyle utilisables pour la réalisation des complexes multicouches selon l'invention comprennent donc aussi bien les homopolymères du chlorure de vinyle que ses copolymères contenant des unités monomériques dérivées d'un ou de plusieurs comonomères et leurs mélanges. A titres d'exemples non limitatifs de pareils comonomères du chlorure de vinyle on peut citer les oléfines telles que l'éthylène, le propylène et le styrène, les esters tels que l'acétate de vinyle et les acrylates et méthacrylates d'alkyle. On donne la préférence aux homopolymères du chlorure de vinyle.

Par polymère plastifié du chlorure de vinyle, on entend désigner les polymères du chlorure de vinyle tels que définis ci-dessus dont la dureté Shore A, mesurée selon la norme ASTM D2240, ne dépasse pas 95 et, de préférence 90. Habituellement la dureté Shore A est égale à 60 au moins. A titre d'exemples de pareils polymères plastifiés, on peut mentionner ceux contenant environ 35 à 75 parties en poids de plastifiant et, de préférence, au moins 40 parties en poids de plastifiant pour 100 parties en poids de polymère du chlorure de vinyle. Les plastifiants utilisables peuvent être choisis indifféremment parmi les plastifiants, monomériques ou polymériques, usuels des polymères du chlorure de vinyle. A titre d'exemples non limitatifs de pareils plastifiants on peut mentionner les phtalates, les sebaçates, les adipates, les trimellitates, les citrates, les phosphates et les polyesters tels que la poly-$\epsilon$-caprolactone et leurs mélanges.

On peut également faire appel à des polymères du chlorure de vinyle dits à plastification interne obtenus par copolymérisation du chlorure de vinyle avec des comonomères plastifiants, tels que par exemple de l'acrylate d'éthylhexyle.

Il est entendu que chacun des polymères constitutifs des structures à couches multiples selon l'invention peut comprendre les additifs usuels utilisés à la mise en oeuvre de ce polymère, tels que, par exemple, des lubrifiants, des plastifiants, des stabilisants thermiques, des stabilisants à la lumière, des charges particulaires ou fibreuses, des pigments, etc.. Il est particulièrement avantageux d'incorporer au polymère du fluorure de vinylidène ou encore aux polymères adhésifs un agent stabilisant aux rayons ultraviolets en vue de protéger le polymère plastifié du chlorure de vinyle. De même, il peut être avantageux d'incorporer une faible quantité, par exemple jusqu'à 10 % en poids environ, de polymères adhésifs aux polymères constitutifs des structures à couches multiples.

EP 0 323 672 B1

Le mode d'obtention des structures multicouches selon l'invention n'est pas critique. On peut donc faire appel à toutes les techniques usuelles d'assemblage de couches polymériques pour réaliser les structures multicouches selon l'invention. A titre d'exemple de pareille technique, on peut citer le thermocollage à l'intervention d'une solution du mélange d'adhésifs polymériques dans un solvant ou un mélange de solvants appropriés. Des solvants convenant pour cette technique d'assemblage sont, par exemple, les hydrocarbures chlorés, tels que le chlorure de méthylène, les cétones telles que l'acétone et la méthyléthyl-cétone, les éthers tels que le tétrahydrofuranne et les esters tels que l'acétate d'éthyle et leurs mélanges. On donne néanmoins la préférence au tétrahydrofuranne. En pratique, le thermocollage à l'intervention d'une solution du mélange d'adhésifs polymériques s'effectue par enduction à froid, par exemple à l'aide d'un racle, d'un film, d'une feuille ou d'une plaque en polymère du fluorure de vinylidène (ou en polymère plastifié du chlorure de vinyle) au moyen d'une solution du mélange d'adhésifs, séchage de l'enduit et pressage à chaud du film, de la feuille ou de la plaque enduites (préencollées) sur un film, un feuille ou une plaque en polymère plastifié du chlorure de vinyle (ou en polymère du fluorure de vinylidène).

La température et la durée de thermocollage optimales seront évaluées par voie expérimentale dans chaque cas particulier. Elles dépendent, notamment, de la nature des polymères de fluorure de vinylidène et de chlorure de vinyle, l'épaisseur des couches polymériques assemblées et des additifs de mise en oeuvre éventuellement incorporés aux différents polymères.

D'autres techniques d'assemblage de couches polymériques usuelles et appropriées pour réaliser les structures multicouches selon l'invention sont celles dans lesquelles les polymères constitutifs sont mis en oeuvre à une température au moins égale à leur température du ramollissement, telles que le thermolaminage (pressage à chaud de couches polymériques préformées, par exemple, par extrusion), la coextrusion et la coextrusion-doublage.

Des structures à couches polymériques multiples auxquelles on donne la préférence sont celles résultant d'un assemblage par thermocollage ou encore par thermolaminage, par coextrusion ou par coextrusion-doublage et qui comprennent trois couches, en l'occurence et dans l'ordre une couche en polymère du fluorure de vinylidène, une couche constituée du mélange de polymères adhésifs selon l'invention et une couche en polymère plastifié du chlorure de vinyle.

L'épaisseur des couches polymériques constitutives des structures à couches polymériques selon l'invention et l'épaisseur totale desdites structures n'est pas critique et dépend bien entendu de l'usage auquel on les destine. Les structures multicouches selon l'invention peuvent donc se présenter sous forme de films, de feuilles, de tubes, de berlingots et de poches souples. Elles peuvent être utilisées avantageusement dans des domaines d'application où une adhérence élevée à chaud, associée à une inertie chimique ou une résistance aux rayons ultraviolets élevées, sont exigées. A titre d'exemples pratiques non limitatifs d'utilisations de complexes multicouches selon l'invention, on peut signaler la fabrication de bâches et de feuilles d'étanchéité susceptibles d'être exposées au soleil et des recouvrements de sièges et de garnitures pour voitures automobiles.

Les structures à couches polymériques multiples selon l'invention conviennent particulièrement pour la fabrication d'emballages souples pour produits alimentaires, pharmaceutiques et cosmétologiques et, plus particulièrement encore, pour la fabrication de poches et de berlingots stérilisables pour l'emballage de liquides nutritionnels ou physiologiques et, en particulier, de poches à sang, à soluté ou à dialyse.

Les exemples qui suivent sont destinés à illustrer l'invention.

Les exemples 1 et 2, selon l'invention, concernent des structures à trois couches obtenues par coextrusion.

Les exemples 3 à 10, selon l'invention, et les exemples 11 à 16, de comparaison, concernent des structures à trois couches obtenues par thermocollage.

Dans tous les exemples, le polymère du fluorure de vinylidène est un homopolymère du fluorure de vinylidène commercialisé par SOLVAY & Cie sous la marque enregistrée SOLEF, de type 1008.

Dans tous les exemples, le polymère plastifié du chlorure de vinyle est un homopolymère du chlorure de vinyle.

Dans les exemples 1 et 2, on a utilisé pour la coextrusion une composition à base de polychlorure de vinyle de nombre K 71 (100 parties en poids) contenant du phtalate de diéthylhexyle (44 parties), de l'huile de soja époxydée (4,2 parties) et un stabilisant calcium-zinc (0,4 parties). Dans les exemples 3 à 16, on a utilisé pour le thermocollage une feuille en polychlorure de vinyle plastifié commercialisée par ALKOR GmbH KUNSTSTOFFE sous la marque enregistrée ALKORPLAN, de type 35070.

La composition des adhésifs polymériques utilisés dans les exemples 1 à 16, à savoir celle des copolymères de chlorure de vinyle et d'acétate de vinyle (COP VC-VAC) (adhésifs I) et des copolymères d'acétate de vinyle et d'éthylène (COP VAC-E) (adhésifs II) est reprise au tableau en annexe. Dans ce tableau figure également la composition des mélanges d'adhésifs polymériques mis en oeuvre et, en

4

particulier, la proportion pondérale des adhésifs I et II, la teneur pondérale en acétate de vinyle des mélanges exprimée en pourcent [VAC], leur viscosité dynamique à 100°C et 1 sec⁻¹, $\eta$, exprimée en kPa.s et enfin le produit [VAC].$\eta$.

La viscosité dynamique des mélanges d'adhésifs polymériques est évaluée sur un rhéomètre qui permet de mesurer les propriétés mécaniques dynamiques des polymères de l'état vitreux ou cristallin à l'état fondu. Les mesures s'effectuent sur des pastilles de 1 à 2 mm d'épaisseur et de 2,5 cm de diamètre prélevées dans des échantillons préparés à partir de solutions à 15-20 % en poids des mélanges d'adhésifs polymérique dans le tétrahydrofuranne. Après évaporation du tétrahydrofuranne pendant 48 heures à température ambiante, le résidu polymérique est chauffé pendant 2 minutes à 100°C et ensuite pressé pendant 2 minutes à 100°C sous une pression de 80 bars. L'échantillon pressé est ensuite refroidi sous une pression de 80 bars, jusqu'à la température ambiante, après quoi il est découpé en pastilles.

La mesure consiste à déterminer sous une fréquence de 0,16 cycle par seconde, c'est-à-dire pour un gradient de vitesse de 1 sec⁻¹ et à une température de 100°C, les modules $G'$ et $G''$. La viscosité dynamique à 100°C et 1 sec⁻¹, se calcule ensuite par la formule suivante :

$$\eta = \frac{G'^{,2} + G''^{,2}}{2 \ \pi \nu}$$

Les exemples 1 et 2 concernent une structure tubulaire coextrudée à trois couches comprenant, dans l'ordre, une couche (A) en homopolymère du fluorure de vinylidène (épaisseur : 74 $\mu$m), une couche (B) en un mélange de copolymère d'acétate de vinyle et d'éthylène et de copolymère de chlorure et d'acétate de vinyle (épaisseur : 128 $\mu$m) (cf. tableau en annexe) et une couche (C) en polychlorure de vinyle souple (épaisseur : 338 $\mu$m). Pour fabriquer les structures coextrudées à trois couches des exemples 1 et 2, on dispose de trois extrudeuses (A) (B) (C) alimentant une tête de coextrusion. Les températures de chauffe affichées sont depuis la zone d'alimentation à la zone de pompage respectivement de :

| 200°C - 210°C | sur l'extrudeuse A |
| 143°C - 151°C | sur l'extrudeuse B |
| 115°C - 143°C - 160°C | sur l'extrudeuse C. |
| Les extrudeuses A, B, C alimentent respectivement les couches A, B, C de la structure coextrudée. | |

Les exemples 3 à 16 concernent le thermocollage d'une couche en homopolymère du fluorure de vinylidène (film d'une épaisseur de 70 $\mu$m) sur une feuille en polychlorure de vinyle plastifié (épaisseur : 1,5 mm) au moyen des adhésifs polymériques détaillés au tableau en annexe.

Avec une racle à fil de 200 $\mu$m, on enduit le film en polyfluorure de vinylidène d'une solution d'adhésif-(s) polymérique(s) à 15-20 % en poids dans le tétrahydrofuranne, on sèche l'enduit directement après l'enduction pendant 3 minutes dans un four de séchage ventilé et porté à 80°C. L'épaisseur totale de l'enduit sec s'élève à 30-40 $\mu$m suivant le concentration en adhésif(s) polymérique(s). Le film préencollé en polyfluorure de vinylidène est pressé à chaud sur une feuille en polychlorure de vinyle plastifié pendant 1 minute 30 secondes et sous une pression de 30 bar dans une presse maintenue à 140°C, puis le complexe est transféré dans une presse froide et y est maintenu à température ambiante pendant 8 minutes sous la même pression.

Dans le tableau en annexe sont repris les résultats de l'évaluation de l'adhérence mesurée par le biais de la résistance au pelage des structures multicouches selon les exemples 1 à 16. La résistance au pelage est mesurée sur un dynamomètre suivant une méthode inspirée de la norme ASTM D 1876-72. Avant la mesure les échantillons sont conditionnés dans une salle isotherme à 23°C pendant 24 heures (adhérence à 23°C), respectivement dans une étuve ventilée à 80°C pendant 20 minutes (adhérence à 80°C).

TABLEAU

| | Adhésifs polymériques | | | | Mélanges d'adhésifs polymériques | | | | | |
|---|---|---|---|---|---|---|---|---|---|---|
| | COP VC-VAC (Adhésifs I) | | COP VAC-E (Adhésifs II) | | Proportion pondérale I : II | [VAC] | $\eta$, kPa·s | [VAC]·$\eta$ | Adhérence, Newton/cm | |
| | teneur en acétate % en poids | nombre K | teneur en acétate % en poids | MI* | | | | | à 23°C | à 80°C |
| 1 | 15 | 50 | 85 | 1,95 | 25 : 75 | 67,5 | 60 | 4·10³ | 13 | 3,2 |
| 2 | 15 | 50 | 85 | 1,95 | 50 : 50 | 50 | 100 | 5·10³ | 12,5 | 3,1 |
| 3 | 10 | 60 | 93 | 2,59 | 50 : 50 | 51,5 | 83,7 | 4,3·10³ | 12,7 | 3,5 |
| 4 | 10 | 60 | 65,5 | 2,21 | 25 : 75 | 51,7 | 106 | 5,4·10³ | 12,9 | 3 |
| 5 | 10 | 60 | 93 | 2,59 | 10 : 90 | 85,75 | 65 | 5,5·10³ | 12,15 | 3,4 |
| 6 | 10 | 60 | 82 | 1,65 | 50 : 50 | 46 | 131 | 6,0·10³ | 13 | 3,5 |
| 7 | 10 | 60 | 93 | 2,59 | 25 : 75 | 72,25 | 93 | 6,7·10³ | 13 | 4 |
| 8 | 10 | 60 | 65,5 | 2,21 | 10 : 90 | 60 | 61 | 3,6·10³ | 12,9 | 3,5 |
| 9 | 10 | 60 | 82 | 1,65 | 25 : 75 | 64 | 117 | 7,4·10³ | 13 | 3 |
| 10 | 10 | 60 | 65,5 | 2,21 | 50 : 50 | 37,75 | 111 | 4,2·10³ | 13,1 | 3,1 |
| 11 | - | - | 56 | 103 | 0 : 100 | 56 | 12 | 0,67·10³ | 4,9 | 0,13 |
| 12 | - | - | 68 | 89 | 0 : 100 | 68 | 10 | 0,68·10³ | 4,2 | 0,10 |
| 13 | 10 | 60 | 70 | 401 | 25 : 75 | 55 | 10 | 0,55·10³ | 5,2 | 0,40 |
| 14 | 10 | 60 | 56 | 103 | 10 : 90 | 51,9 | 49 | 2,5·10³ | 6,5 | 0,50 |
| 15 | 10 | 60 | 56 | 103 | 50 : 50 | 35,5 | 80 | 2,8·10³ | 4,9 | 0,90 |
| 16 | 10 | 60 | 68 | 89 | 10 : 90 | 62,7 | 15 | 0,94·10³ | 4,9 | 0,10 |

* MI : indice de fluidité mesuré à 170°C sous une charge de 10 kg

## Revendications

1. Structures à couches polymériques multiples comprenant une couche en polymère du fluorure de vinylidène liée à une couche en polymère plastifié du chlorure de vinyle, caractérisées en ce que la couche en polymère du fluorure de vinylidène est liée à la couche en polymère plastifié du chlorure de vinyle au moyen d'un mélange d'adhésifs polymériques constitué de copolymère d'acétate de vinyle et d'éthylène et de copolymère de chlorure de vinyle et d'acétate de vinyle, ledit mélange contenant de 36 à 95 % en poids d'acétate de vinyle et présentant une viscosité dynamique à 100°C et 1 sec$^{-1}$ égale à 55 kPa.s au moins.

**2.** Structures à couches polymériques multiples suivant la revendication 1, caractérisées en ce que le mélange d'adhésifs polymériques contient de 36 à 90 % en poids d'acétate de vinyle et présente une viscosité dynamique à 100°C et 1 sec$^{-1}$ égale à 60 kPa.s au moins.

**3.** Structures à couches polymériques multiples suivant la revendication 1, caractérisées en ce que le produit de la teneur pondérale en acétate de vinyle, exprimée en pourcent, par la viscosité dynamique à 100°C et 1 sec$^{-1}$, exprimée en kPa.s, est supérieur à 3.10$^3$.

**4.** Structures à couches polymériques multiples suivant la revendication 3, caractérisées en ce que le produit est supérieur à 3,5.10$^3$.

**5.** Structures à couches polymériques multiples suivant l'une quelconque des revendications 1 à 4, caractérisées en ce que le copolymère d'acétate de vinyle et d'éthylène est un copolymère binaire d'acétate de vinyle et d'éthylène contenant de 60 à 99 % en poids d'acétate de vinyle.

**6.** Structures à couches polymériques multiples suivant l'une quelconque des revendications 1 à 4, caractérisées en ce que le copolymère de chlorure de vinyle et d'acétate de vinyle est un copolymère binaire de chlorure de vinyle et d'acétate de vinyle contenant de 60 à 98 % en poids de chlorure de vinyle.

**7.** Structures à couches polymériques multiples suivant l'une quelconque des revendications 1 à 6, caractérisées en ce que le polymère du fluorure de vinylidène contient au moins 90 % molaires d'unités monomériques dérivées du fluorure de vinylidène.

**8.** Structures à couches polymériques multiples suivant l'une quelconque des revendications 1 à 6, caractérisées en ce que le polymère plastifié du chlorure de vinyle est un homopolymère plastifié de chlorure de vinyle.

**9.** Utilisation des structures à couches polymériques multiples suivant l'une quelconque des revendications 1 à 8 pour la fabrication d'emballages souples pour produits alimentaires, pharmaceutiques en cosmétologiques.

**10.** Utilisation des structures à couches polymériques multiples suivant la revendication 9 pour la fabrication de poches et de berlingots stérilisables destinés à l'emballage de liquides nutritionnels ou physiologiques.

**Claims**

**1.** Structures with multiple polymeric layers comprising a layer of vinylidene fluoride polymer bonded to a layer of plasticised vinyl chloride polymer, which are characterised in that the layer of vinylidene fluoride polymer is bonded to the layer of plasticised vinyl chloride polymer by means of a mixture of polymeric adhesives consisting of a copolymer of vinyl acetate and of ethylene and of a copolymer of vinyl chloride and of vinyl acetate, the said mixture containing from 36 to 95% by weight of vinyl acetate and exhibiting a dynamic viscosity equal to at least 55 kPa s at 100°C and 1 s$^{-1}$.

**2.** Structures with multiple polymeric layers according to Claim 1, characterised in that the mixture of polymeric adhesives contains from 36 to 90% by weight of vinyl acetate and exhibits a dynamic viscosity equal to at least 60 kPa s at 100°C and 1 s$^{-1}$.

**3.** Structures with multiple polymeric layers according to Claim 1, characterised in that the product of the weight content of vinyl acetate, expressed in per cent, multiplied by the dynamic viscosity at 100°C and 1 s$^{-1}$, expressed in kPa s, is greater than 3 x 10$^3$.

**4.** Structures with multiple polymeric layers according to Claim 3, characterised in that the product is greater than 3.5 x $10^3$.

**5.** Structures with multiple polymeric layers according to any one of Claims 1 to 4, characterised in that the copolymer of vinyl acetate and of ethylene is a binary copolymer of vinyl acetate and of ethylene containing from 60 to 99% by weight of vinyl acetate.

**6.** Structures with multiple polymeric layers according to any one of Claims 1 to 4, characterised in that the copolymer of vinyl chloride and of vinyl acetate is a binary copolymer of vinyl chloride and of vinyl acetate containing from 60 to 98% by weight of vinyl chloride.

**7.** Structures with multiple polymeric layers according to any one of Claims 1 to 6, characterised in that the vinylidene fluoride polymer contains at least 90 mol% of monomeric units derived from vinylidene fluoride.

**8.** Structures with multiple polymeric layers according to any one of Claims 1 to 6, characterised in that the plasticised vinyl chloride polymer is a plasticised vinyl chloride homopolymer.

**9.** Use of the structures with multiple polymeric layers according to any one of Claims 1 to 8 for the manufacture of flexible packaging for alimentary, pharmaceutical and cosmetological products.

**10.** Use of the structures with multiple polymeric layers according to Claim 9 for the manufacture of sterilisable pouches and packs intended for packaging nutritional or physiological liquids.

**Patentansprüche**

**1.** Strukturen mit mehreren polymeren Schichten, umfassend eine Polyvinylidenfluoridschicht, die mit einer weichgemachten Polyvinylchloridschicht verbunden ist, dadurch gekennzeichnet, daß die Polyvinylidenfluoridschicht mit der weichgemachten Polyvinylchloridschicht mittels einer polymeren Klebstoffmischung verbunden ist, die aus Vinylacetat-Ethylen-Copolymer und Vinylchlorid- Vinylacetat-Copolymer gebildet ist, wobei die Mischung 36 bis 95 Gew.-% Vinylacetat enthält und eine dynamische Viskosität bei 100°C und 1 $sec^{-1}$ von wenigstens gleich 55 kPa.s aufweist.

**2.** Strukturen mit mehreren polymeren Schichten gemäß Anspruch 1, dadurch gekennzeichnet, daß die polymere Klebstoffmischung 36 bis 90 Gew.% Vinylacetat enthält und eine dynamische Viskosität bei 100°C und 1 $sec^{-1}$ von wenigstens gleich 60 kPa.s aufweist.

**3.** Strukturen mit mehreren polymeren Schichten gemäß Anspruch 1, dadurch gekennzeichnet, daß das Produkt des Gewichtsgehalts an Vinylacetat, ausgedrückt in Prozent und dynamischer Viskosität bei 100°C und 1 $sec^{-1}$, ausgedrückt in kPa.s, größer als $3.10^3$ ist.

**4.** Strukturen mit mehreren polymeren Schichten gemäß Anspruch 3, dadurch gekennzeichnet, daß das Produkt größer als $3,5.10^3$ ist.

**5.** Strukturen mit mehreren polymeren Schichten gemäß einem der Ansprüche 1 bis 4, dadurch gekennzeichnet, daß das Vinylacetat- Ethylen-Copolymer ein binäres Vinylacetat-Ethylen-Copolymer ist, das 60 bis 99 Gew.-% Vinylacetat enthält.

**6.** Strukturen mit mehreren polymeren Schichten gemäß einem der Ansprüche 1 bis 4, dadurch gekennzeichnet, daß das Vinylchlorid- Vinylacetat-Copolymer ein binäres Vinylchlorid- Vinylacetat-Copolymer ist, das 60 bis 98 Gew.-% Vinylchlorid enthält.

**7.** Strukturen mit mehreren polymeren Schichten gemäß einem der Ansprüche 1 bis 6, dadurch gekennzeichnet, daß das Polyvinylidenfluorid wenigstens 90 Mol-% monomere Einheiten, abgeleitet von Vinylidenfluorid, enthält.

**8.** Strukturen mit mehreren polymeren Schichten gemäß einem der Ansprüche 1 bis 6, dadurch gekennzeichnet, daß das weichgemachte Polyvinylchlorid ein weichgemachtes Vinylchloridhomopolymer ist.

9. Verwendung der Strukturen mit mehreren polymeren Schichten nach einem der Ansprüche 1 bis 8 für die Herstellung von Weichverpackungen für Nahrungs-, pharmazeutische und kosmetische Produkte.

10. Verwendung der Strukturen mit mehreren polymeren Schichten nach Anspruch 9 für die Herstellung von sterilisierbaren Taschen und Beuteln, die zur Verpackung von Nähr- oder physiologischen Flüssigkeiten bestimmt sind.